# EUROPEAN PATENT APPLICATION

(11) **EP 4 685 974 A1**
(43) Date of publication of application: **28.01.2026**
(21) Application number: 24882764.4
(22) Date of filing: 22.10.2024
(51) Int. Cl.: H01M 50/46, H01M 50/403, H01M 50/446, H01M 50/449, H01M 50/414, H01M 50/431, H01M 10/052

(54) **METHOD FOR MANUFACTURING ELECTRODE-INTEGRATED SEPARATOR FOR LITHIUM SECONDARY BATTERY**

(30) Priority: 23.10.2023 KR 20230142205; 18.10.2024 KR 20240143124
(71) Applicant: LG Chem, Ltd., Seoul 07336 (KR)
(72) Inventor: KIM, Daeho, Daejeon 34122 (KR); KOO, Beom Mo, Daejeon 34122 (KR); LEE, Seung Heon, Daejeon 34122 (KR); PARK, Youngjin, Daejeon 34122 (KR)
(74) Representative: Plasseraud IP
(86) International application number: PCT/KR2024/016035
(87) International publication number: WO 2025/089737

(57) **Abstract**

The present invention relates to a method for manufacturing an electrode-integrated separator for lithium secondary batteries. According to the present invention, a method for manufacturing an electrode-integrated separator is provided, which can minimize defects such as pinholes while exhibiting excellent interlayer bonding durability.

## Description

### [TECHNICAL FIELD]

### CROSS-REFERENCE TO RELATED APPLICATION(S)

This application claims the benefit of Korean Patent Application No. 10-2023-0142205 filed on October 23, 2023, and Korean Patent Application No. 10-2024-0143124 filed on October 18, 2024 in the Korean Intellectual Property Office, the disclosure of which is incorporated herein by reference in its entirety.

The present invention relates to a method for manufacturing an electrode-integrated separator for lithium ion secondary batteries.

### [BACKGROUND OF ART]

With the advancement of mobile phones, laptop computers, tablet computers, mobile batteries, electric vehicles, and personal mobility devices, the demand for secondary batteries used as their driving power sources has been steadily increasing. In particular, lithium secondary batteries, which have a high operating voltage and high energy density per unit weight, are the most widely used.

Lithium secondary batteries generally have a structure in which a chargeable and dischargeable electrode assembly of a cathode, a separator, and an anode is mounted in a battery case. The cathode and anode are manufactured by applying a slurry containing an active electrode material to one or both sides of a metal current collector, followed by drying and rolling.

The separator is one of the important factors determining the lifespan of a secondary battery, electrically insulating the cathode and anode. The separator requires ionic permeability and mechanical strength to allow the electrolyte to pass smoothly. As the application scope of high-energy lithium secondary batteries expands, the demand for the safety of separators at high temperatures is also increasing.

Typically, separators consisting of a substrate and an inorganic coating layer do not have sufficient adhesion to the electrodes due to their material characteristics. Consequently, there is a problem of partial lifting or wrinkling at the interface between the electrode and the separator. Additionally, polyolefin, which is generally used as the substrate, has issues with thermal stability, such as melting at high temperatures.

To solve these problems, a method of configuring the separator only with an inorganic coating film by removing the substrate has been proposed. However, such separators still do not have sufficient adhesion to the electrodes and have significantly low insulation, making them vulnerable to internal short circuits when applied to electrochemical devices. These separators have a critical disadvantage of low tensile strength and elongation, causing the separator to tear easily and create micro-short circuits within the electrode assembly. Furthermore, depending on the state of the electrode substrate (e.g., porosity and surface roughness of the electrode active material layer), uneven separator coating and resulting defects may occur.

### [DETAILED DESCRIPTION OF THE INVENTION]

### [Technical Problem]

It is an object of the present disclosure to provide a method for manufacturing an electrode-integrated separator that has excellent interlayer bonding durability while minimizing defects caused by the occurrence of pinholes and the like.

### [Technical Solution]

According to one embodiment of the invention, a method for manufacturing an electrode-integrated separator for a lithium secondary battery is provided, which includes the steps of applying a binder solution containing a first polymer binder onto an electrode substrate to form a binder coating layer, and applying a slurry containing a second polymer binder and inorganic fine particles onto the binder coating layer to form a porous layer; the binder solution has a viscosity of 1000 cP to 9500 cP at 25°C.

Hereinafter, a more detailed description will be given of the method for manufacturing the electrode-integrated separator for a lithium secondary battery according to an embodiment of the invention.

The terms or words used in this specification and claims should not be interpreted as being limited to their usual or dictionary meanings, and should be interpreted as meanings and concepts consistent with the technical spirit of the invention, based on the principle that the inventor can appropriately define the concept of terms to best describe his invention.

Unless otherwise defined in this specification, all technical and scientific terms have the same meanings as those generally understood by those skilled in the art to which this invention belongs.

The terms used in the description of the present invention are merely intended to effectively describe specific embodiments and are not intended to limit the present invention.

The singular forms used in this specification include plural forms as well, unless the context clearly indicates otherwise.

The term "comprising" as used in this specification specifies the presence of stated features, regions, integers, steps, actions, elements, and/or components, but does not preclude the presence or addition of other features, regions, integers, steps, actions, elements, components, and/or groups thereof.

The present invention may be modified in various ways and may have various forms, and thus, specific embodiments will be illustrated and described in detail below. However, this is not intended to limit the present invention to specific disclosed forms, but should be understood to include all modifications, equivalents, and alternatives falling within the spirit and scope of the invention.

In this specification, when the positional relationship of two parts is described, such as 'on~', 'above~', 'below~', and 'next to~', etc., unless the expression 'immediately' or 'directly' is used, one or more other parts may be located between the two parts.

In this specification, when the temporal relationship is described, such as 'after~', 'following~', 'next~', and 'before', etc., unless the expression 'immediately' or 'directly' is used, it may include non-continuous cases.

The term 'at least one' in this specification should be understood to include all possible combinations from one or more related items.

In this specification, when any one layer is said to be combined with another layer "via" another layer, it means that the one layer and the other layer are laminated and combined by the other layer interposed in at least some areas between the one layer and the other layer.

Also, the terms including ordinals such as "first" and "second" in this specification are used for distinguishing one component from another component and are not limited by the ordinal numbers. For example, within the scope of the present invention, a first component may also be referred to as a second component, and similarly, a second component may be referred to as a first component.

As described in the background art of the invention, a separator composed only of an inorganic coating film has a limitation in that it cannot be manufactured in the form of a free-standing thin film due to its low mechanical properties.

Due to this limitation, a method of manufacturing an electrode-integrated separator by coating an inorganic coating composition onto an electrode has been proposed. However, this method may result in uneven separator coating properties and consequent defects depending on the state of the electrode (e.g., porosity and surface roughness).

As a result of continuous research by the inventors, it has been confirmed that an electrode-integrated separator, which can minimize defects such as pinholes while having excellent interlayer bonding durability, may be provided by the following manufacturing method.

According to one embodiment of the invention, a method for manufacturing an electrode-integrated separator for a lithium secondary battery includes the steps of applying a binder solution containing a first polymer binder onto an electrode substrate to form a binder coating layer, and applying a slurry containing a second polymer binder and inorganic fine particles onto the binder coating layer to form a porous layer. The binder solution has a viscosity of 1000 cP to 9500 cP at 25 °C.

This manufacturing method provides an electrode-integrated separator for a lithium secondary battery by sequentially forming the binder coating layer and the porous layer on the electrode substrate.

By mediating the binder coating layer, the electrode substrate and the porous layer are bonded, ensuring superior interlayer bonding durability compared to the method of directly forming the porous layer on the electrode substrate.

When forming the porous layer directly on the electrode substrate, the coating properties of the slurry for forming the porous layer can become uneven depending on the porosity and surface roughness of the electrode substrate, which can result in serious defects such as pinholes during the coating process.

However, by sequentially forming the binder coating layer and the porous layer on the electrode substrate according to the manufacturing method, the porous layer may be formed uniformly and flatly on the binder coating layer, minimizing defects such as pinholes.

To manifest the characteristics as described above, it is preferable for the binder solution to have a viscosity of 1000 cP to 10000 cP at 25 °C.

Specifically, the binder solution may have a viscosity of at least 1000 cP, or at least 3500 cP, or at least 5000 cP, or at least 5500 cP; and at most 9500 cP, or at most 9000 cP, or at most 8500 cP, or at most 8000 cP at 25 °C.

To prevent pinholes from occurring due to the diffusion of solvent and bubbles in the step of coating the binder solution on the electrode substrate, it is preferable for the binder solution to have a viscosity of at least 1000 cP, or at least 3500 cP, or at least 5000 cP, or at least 5500 cP at 25 °C. However, if the viscosity of the binder solution is too high, the coatability of the binder solution may deteriorate, making it difficult to manifest the characteristics required for the binder coating layer. Therefore, it is preferable for the binder solution to have a viscosity of at most 9500 cP, or at most 9000 cP, or at most 8500 cP, or at most 8000 cP at 25 °C.

Preferably, the binder solution may have a viscosity of 1000 cP to 9500 cP, or 3500 cP to 9500 cP, or 5000 cP to 9500 cP, or 5500 cP to 9500 cP, or 5500 cP to 9000 cP, or 5500 cP to 8500 cP, or 5500 cP to 8000 cP at 25 °C.

The viscosity of the binder solution may be measured using conventional devices such as a viscometer and a rheometer. For example, the viscosity may be measured using a Brookfield viscometer (RV, #5, 50 rpm, 25 °C) according to the ASTM D 2196 test method.

According to one embodiment, a step of forming a binder coating layer by applying a binder solution containing a first polymer binder on an electrode substrate is performed.

The electrode substrate may be an electrode substrate for an anode or a cathode. The electrode substrate includes an electrode active material layer laminated on an electrode current collector layer.

The electrode collector layer may comprise any electrode collector known in the art to have conductivity without causing chemical changes in the lithium secondary cell. For example, the electrode collector may be stainless steel; aluminum; nickel; titanium; calcined carbon; or aluminum or stainless steel surface treated with carbon, nickel, titanium, silver, or the like.

Preferably, the electrode current collector may have a thickness of 3 µm to 500 µm. To increase adhesion with the electrode material, the electrode current collector may have fine irregularities formed on its surface. The electrode current collector can have various forms such as film, sheet, foil, net, porous body, foam, or nonwoven fabric.

The electrode active material layer includes an electrode material composition that is a mixture of an electrode active material, a conductive material, and a binder.

Said conductive material may be used to impart electronic conductivity to the electrode.

Without limitation, any conductive material may be used as a conductive material, provided that it is electronically conductive without causing chemical changes in the lithium secondary cell. Non-limiting examples include carbon-based materials such as carbon black, acetylene black, Ketjenblack, channel black, furnace black, lampblack, thermal black, carbon fiber, etc.; graphite, such as natural or artificial graphite; metal powders or metal fibers, such as copper, nickel, aluminum, silver, etc.; conductive whiskeys, such as zinc oxide, potassium titanate, etc.; conductive metal oxides, such as titanium oxide; or conductive polymers, such as polyphenylene derivatives. A mixture of one, two or more of the above examples may be used as the coating material.

The content of the conductive material may be adjusted to provide an appropriate level of conductivity while not causing a reduction in the capacity of the lithium secondary cell. Preferably, the content of said coating material may be from 1 wt% to 10 wt%, or from 1 wt% to 5 wt%, relative to the total weight of the electrode material composition.

The binder is used to ensure that the electrode material composition adheres well to the electrode current collector.

As a non-limiting example, said binder may be polyvinyl alcohol, polyacrylate, carboxymethylcellulose, hydroxypropylcellulose, diacetylcellulose, polyvinyl chloride, carboxylated polyvinyl chloride, polyvinyl fluoride, polymers including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon resin, and the like. A mixture of one or two or more of the above examples may be used as the binder.

The content of the binder may be adjusted to a range that produces an adequate level of adhesion but does not cause a reduction in the capacity of the lithium secondary cell. Preferably, the content of the binder may be from 1 wt% to 10 wt% or from 1 wt% to 5 wt% based on the total weight of the electrode material composition.

If the electrode substrate is the cathode part, the cathode active material may be used without particular limitation as long as it is a material capable of reversible insertion and extraction of lithium ions.

For example, the cathode active material may be a composite oxide or phosphate containing lithium and a metal such as cobalt, manganese, nickel, iron, or a combination thereof.

In another example, the cathode active material may be a compound represented by any one of the following chemical formulas: LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1.); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the chemical formulas above, A is Ni, Co, Mn or a combination thereof; R is Al, Ni, Co, Mn, Cr, Fe, Mg, Sr, V, rare earth elements or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; J is V, Cr, Mn, Co, Ni, Cu or a combination thereof.

It is also possible to use an cathode active material having a coating layer on its surface, or to use a mixture of an cathode active material and an cathode active material having a coating layer. Coating elements included in the coating layer may be Mg, Al, Co, K, Na, Ca, Si, Ti, V, Sn, Ge, Ga, B, As, Zr or a mixture thereof.

According to one embodiment, said cathode active material may comprise from 80 wt% to 95 wt% of the total weight of said electrode material composition. Preferably, the content of said cathode active material may be from 82 wt% to 95 wt%, or from 82 wt% to 93 wt%, or from 85 wt% to 93 wt%, or from 85 wt% to 90 wt%, based on the total weight of said electrode material composition.

In case that the above electrode substrate is the anode part, the anode active material may include materials capable of reversible intercalation and deintercalation of lithium ions, lithium metal, lithium metal alloys, materials capable of doping and dedoping lithium, and transition metal oxides.

Examples of materials capable of reversible intercalation and deintercalation of lithium ions include carbonaceous materials such as crystalline carbon, amorphous carbon, or mixtures thereof. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch-derived cokes, soft carbon, and hard carbon.

The lithium metal alloy may be an alloy of lithium with a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and undoping lithium may be Si, Si-C composite, SiOₓ (0<x<2), Si-Q alloy (where Q is an element selected from the group consisting of alkali metals, alkaline earth metals, group 13 elements, group 14 elements, group 15 elements, group 16 elements, transition metals, rare earth elements, and combinations thereof; excluding Si), Sn, SnO₂, Sn-R alloy (where R is an element selected from the group consisting of alkali metals, alkaline earth metals, group 13 elements, group 14 elements, group 15 elements, group 16 elements, transition metals, rare earth elements, and combinations thereof; (excluding Sn). Additionally, the material capable of doping and undoping lithium may be used by mixing at least one of the above examples with SiO₂. Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, etc.

The aforementioned transition metal oxide may be vanadium oxide, lithium vanadium oxide, lithium titanium oxide, etc.

Preferably, the anode active material may include one or more compounds selected from the group consisting of carbonaceous materials and silicon compounds. Here, the carbonaceous material is one or more materials selected from the group consisting of natural graphite, artificial graphite, kish graphite, pyrolytic carbon, mesophase pitch, mesophase pitch-based carbon fiber, carbon microspheres, petroleum or coal-based coke, soft carbon, and hard carbon, as previously exemplified. And the silicon compound may be a compound containing Si as previously exemplified, namely Si, Si-C composite, SiOₓ (0<x<2), the Si-Q alloy, mixtures thereof, or mixtures of at least one of these with SiO₂.

According to one embodiment, the anode active material may be included in an amount of 85 wt% to 98 wt% based on the total weight of the electrode material composition. Preferably, the content of the anode active material may be 85 wt% to 97 wt%, or 87 wt% to 97 wt%, or 87 wt% to 95 wt%, or 90 wt% to 95 wt% based on the total weight of the anode material.

According to one embodiment, the thickness of the electrode active material layer is preferably adjusted in the range of 5 µm to 500 µm, or 5 µm to 450 µm, or 10 µm to 450 µm to express appropriate performance.

Meanwhile, the binder solution containing the first polymer binder is applied onto the electrode substrate, preferably on the electrode active material layer. The binder solution is applied over the entire surface of one side of the electrode substrate.

The binder solution includes the first polymer binder as a solute. The first polymer binder may be one that gels upon liquid electrolyte impregnation, exhibiting a high degree of swelling. After assembling the lithium secondary battery, the injected electrolyte permeates the first polymer binder, and the first polymer binder holding the absorbed electrolyte acquires the ability to conduct electrolyte ions.

According to one embodiment, the first polymer binder is selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, polyvinyl acetate, polyimide, polyetherimide, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene-butadiene rubber, and fluororubber.

According to one embodiment, the binder solution may include one or more selected from the group consisting of acetone, methyl isobutyl ketone, propylene glycol monomethyl ether acetate, N-methyl-2-pyrrolidone, methyl acetate, ethyl acetate, γ-butyrolactone, and ε-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, dimethylformamide, 1,3-dioxolane, and sulfolane as a solvent.

According to one embodiment, it is preferable for the binder solution to include 3.5 wt% to 7.0 wt% of the first polymer binder based on the total weight of the solution.

Specifically, the binder solution may contain at least 3.5 wt%, or at least 3.6 wt%, or at least 3.7 wt%, or at least 3.8 wt%, or at least 3.9 wt%, or at least 4.0 wt%; and at most 7.0 wt%, or at most 6.9 wt%, or at most 6.8 wt%; and at most 6.7 wt%, or at most 6.6 wt% of the first polymer binder based on the total weight of the solution.

In the step of coating the binder solution on the electrode substrate, in order to prevent pinholes from occurring due to the diffusion of solvent and bubbles, it is preferable for the binder solution to include at least 3.5 wt%, or at least 3.6 wt%, or at least 3.7 wt%, or at least 3.8 wt%, or at least 3.9 wt%, or at least 4.0 wt% of the first polymer binder.

However, to prevent the viscosity of the binder solution from becoming too high, it is preferable for the binder solution to include at most 7.0 wt%, or at most 6.9 wt%, or at most 6.8 wt%, at most 6.7 wt%, or at most 6.6 wt% of the first polymer binder.

Preferably, the binder solution may contain 3.5 wt% to 7.0 wt%, or 3.6 wt% to 7.0 wt%, or 3.6 wt% to 6.9 wt%, or 3.7 wt% to 6.9 wt%, or 3.7 wt% to 6.8 wt%, or 3.8 wt% to 6.8 wt%, or 3.8 wt% to 6.7 wt%, or 3.9 wt% to 6.7 wt%, or 3.9 wt% to 6.6 wt%, or 4.0 wt% to 6.6 wt% of the first polymer binder.

According to one embodiment, conventional coating methods known in the technical field to which the present invention belongs may be applied as a method for applying the binder solution on the electrode substrate. For example, the application of the binder solution may utilize spin coating, dip coating, die coating, roll coating, comma coating, gravure coating, bar coating, curtain coating, screen printing, inkjet printing, doctor blade, or a combination thereof.

According to one embodiment, in the step of forming the binder coating layer, it is preferable that the binder solution is applied to a thickness (wet film thickness) of 10 µm to 50 µm on the electrode substrate. Within this thickness range, a binder coating layer with excellent peel strength may be formed without increasing electrical resistance.

Specifically, the binder solution may be applied to a thickness of 10 µm or more or 15 µm or more; and 50 µm or less or 45 µm or less on the electrode substrate.

In order to ensure that the aforementioned characteristics are exhibited in the binder coating layer, it is preferable that the binder solution is applied to a thickness of 10 µm or more or 15 µm or more on the electrode substrate. However, if the thickness of the binder coating layer is too thick, the electrical resistance may increase, deteriorating the performance of the lithium secondary battery. Therefore, it is preferable that the binder solution is applied to a thickness of 50 µm or less or 45 µm or less on the electrode substrate.

Preferably, the binder solution may be applied to a thickness of 10 µm to 50 µm, or 15 µm to 50 µm, or 15 µm to 45 µm on the electrode substrate.

According to one embodiment, the binder coating layer is formed by applying the binder solution on the electrode substrate and drying it. It is preferable that the drying is performed at a temperature of 50°C to 150°C, or 60°C to 150°C, or 60°C to 120°C, or 65°C to 110°C. If the drying temperature does not meet this range, drying efficiency may decrease or shape changes in each layer may occur, causing defects.

The binder coating layer formed through the above steps can have a thickness of 0.3 µm or more or 0.5 µm or more; and 5 µm or less or 3 µm or less to exhibit the aforementioned characteristics. Preferably, the binder coating layer can have a thickness of 0.3 µm to 5 µm, or 0.5 µm to 5 µm, or 0.5 µm to 3 µm.

Following the step of forming the aforementioned binder coating layer, a step of applying a slurry containing a second polymer binder and inorganic fine particles onto the binder coating layer to form a porous layer is performed.

The porous layer is formed by applying a slurry containing the second polymer binder and inorganic fine particles onto the binder coating layer. This porous layer has appropriate porosity and insulation properties, allowing it to function as a separator layer in a lithium secondary battery.

The slurry applied for the formation of the porous layer contains the second polymer binder and inorganic fine particles.

The aforementioned second polymer binder may gel upon liquid electrolyte impregnation, exhibiting a high degree of swelling. The electrolyte injected after assembling the lithium secondary battery permeates the second polymer binder, which retains the absorbed electrolyte and acquires the ability to conduct electrolyte ions.

According to one embodiment, the second polymer binder is selected from one or more compounds from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, polyvinyl acetate, polyimide, polyetherimide, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene-butadiene rubber, and fluororubber.

According to one embodiment, the slurry applied for forming the porous layer may include one or more selected from the group consisting of acetone, methyl isobutyl ketone, propylene glycol monomethyl ether acetate, N-methyl-2-pyrrolidone, methyl acetate, ethyl acetate, γ-butyrolactone, ε-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, dimethylformamide, 1,3-dioxolane, and sulfolane as the solvent.

The inorganic fine particles included in the slurry form micro-pores due to the spaces between the particles, maintain their physical form at high temperatures, and are electrochemically stable.

It is preferable that the inorganic fine particles do not undergo oxidation and/or reduction reactions within the operating voltage range of a secondary battery (for example, 0-5V based on Li/Li+). It is desirable for these inorganic fine particles to have high electrolyte ion transfer capability. To ensure good dispersion within the polymer binder, it is preferable for the inorganic fine particles to have a relatively low density. Furthermore, to contribute to the increase in the dissociation of electrolyte salts within the electrolyte, it is desirable for the inorganic fine particles to have a high dielectric constant.

Preferably, the inorganic fine particles may be selected from one or more of the group consisting of inorganic particles with a dielectric constant of 1 or more, inorganic particles possessing piezoelectric properties, and inorganic particles with lithium ion transfer capability.

In one example, inorganic particles such as SrTiO₃, SnO₂, CeO₂, MgO, NiO, CaO, ZnO, ZrO₂, Y₂O₃, Al₂O₃, boehmite(AlO(OH)), Al(OH)₃, TiO₂, and SiC have a dielectric constant of 1 or more, and may be preferably applied as the inorganic fine particles.

In another example, the inorganic particles possessing piezoelectric properties are insulators at atmospheric pressure but exhibit conductivity when a certain pressure is applied due to changes in their internal structure. These piezoelectric inorganic particles have high dielectric properties with a dielectric constant of 100 or more. Additionally, when a certain pressure is applied to these piezoelectric inorganic particles, causing tension or compression, charges are generated, resulting in one side being positively charged (+) and the opposite side negatively charged (-), thus creating a potential difference between the two sides. Due to these characteristics of the piezoelectric inorganic particles, in case of an internal short circuit occurring at the electrode of a secondary battery due to external impact, it is possible to prevent direct contact between the anode and cathode, thereby promoting a gradual decrease in voltage and enhancing safety. As the piezoelectric inorganic particles, inorganic particles such as BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), and HfO₂ may be preferably applied.

As another example, inorganic particles with lithium ion transfer capability refer to inorganic particles that contain lithium element but do not store lithium and have the function of moving lithium ions. These inorganic particles with lithium ion transfer capability enable improved lithium ion conductivity within the battery. Examples of such inorganic particles include inorganic particles such as Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

Preferably, the inorganic fine particles may be at least one selected from the group consisting of SrTiO₃, SnO₂, CeO₂, MgO, NiO, CaO, ZnO, ZrO₂, Y₂O₃, Al₂O₃, boehmite(AIO(OH)), Al(OH)₃, TiO₂, SiC, BaTiO₃, Pb(Zr,Ti)Os, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

The aforementioned inorganic fine particles may have a particle diameter of 0.001 µm to 10 µm, or 0.005 µm to 10 µm, or 0.005 µm to 8 µm, or 0.01 µm to 8 µm, or 0.01 µm to 5 µm. To ensure dispersibility in the porous layer, it is preferable that the inorganic fine particles have a particle diameter of 0.001 µm or more. However, if the particle diameter of the inorganic fine particles is too large, the thickness of the porous layer increases, resulting in reduced mechanical properties, and internal short circuits may occur during charging and discharging of the lithium secondary battery due to excessively large pore sizes. Therefore, it is preferable that the inorganic fine particles have a particle diameter of 10 µm or less.

The particle diameter of the inorganic fine particles may be confirmed through scanning electron microscope (SEM) images or transmission electron microscope (TEM) images taken of the cross-section of the porous layer.

According to one embodiment, it is preferable that the slurry has a solid content of 30 wt% to 80 wt%.

If the solid content of the slurry is too high, it may cause an increase in viscosity, which can deteriorate the coating properties of the slurry. However, if the solid content of the slurry is too low, pinholes may occur during coating of the slurry, and the drying efficiency of the slurry coating may decrease.

Specifically, the solid content of the slurry may be 30 wt% or more, or 35 wt% or more; and 80 wt% or less, or 75 wt% or less. Preferably, the solid content of the slurry may be 30 wt% to 80 wt%, or 35 wt% to 80 wt%, or 35 wt% to 75 wt%.

According to one embodiment, conventional coating methods known in the technical field to which this invention belongs may be applied as a method for applying the slurry on the binder coating layer. For example, spin coating, dip coating, die coating, roll coating, comma coating, gravure coating, bar coating, curtain coating, screen printing, inkjet printing, doctor blade, or a combination of these may be used for applying the slurry.

The thickness of the slurry formed on the binder coating layer may be adjusted considering the composition of the slurry and the desired final thickness of the porous layer. For optimal performance, it is preferable to adjust the thickness of the porous layer within a range of 10 µm to 100 µm, or 10 µm to 80 µm, or 10 µm to 50 µm.

According to one embodiment, the porous layer is formed by applying the slurry on the binder coating layer and drying it. It is preferable to perform the drying at a temperature between 50 °C and 150 °C, or 60 °C and 150 °C, or 60 °C and 120 °C, or 65 °C and 110 °C. If the drying temperature does not meet this range, drying efficiency may decrease or deformation of each layer may occur, causing defects.

According to one embodiment, the porous layer formed by this method may include 1 to 90 wt% of the polymer binder and 10 to 99 wt% of the inorganic fine particles. To provide appropriate porosity and insulation to the porous layer, it is preferable for the inorganic fine particles to be included at 10 wt% or more. However, if the inorganic fine particles are included in excess, the mechanical properties of the porous layer may deteriorate due to weakened adhesion. Therefore, it is preferable for the inorganic fine particles to be included at 99 wt% or less.

According to one embodiment, it is desirable for the porous layer to have an appropriate range of porosity to exhibit the characteristics of a porous layer. If the porosity of the porous layer is too high, internal short circuits may occur during the charge and discharge of the lithium secondary battery. Therefore, it is preferable for the porosity of the porous layer to be 60% or less.

According to another embodiment of the invention, a lithium secondary battery including an electrode-integrated separator manufactured by the aforementioned method is provided.

For example, the lithium secondary battery may include an electrode assembly comprising a counter electrode disposed on the porous layer of the electrode-integrated separator; an electrolyte impregnated in the electrode assembly; and a battery case that seals and houses the electrode assembly and the electrolyte.

The lithium secondary battery can exhibit excellent durability and stable performance due to the aforementioned electrode assembly.

The lithium secondary battery may have various forms such as prismatic, cylindrical, and pouch types.

The lithium secondary battery may be used as an energy source with improved performance and safety in portable electronic device fields such as mobile phones, laptop computers, tablet computers, mobile batteries, digital cameras; and in transportation fields such as electric vehicles, electric motorcycles, and personal mobility devices.

According to one embodiment, any electrolyte known to be applicable to lithium secondary batteries in the technical field to which this invention belongs may be used without particular limitation as the electrolyte. For example, the electrolyte may be an organic liquid electrolyte, inorganic liquid electrolyte, solid polymer electrolyte, gel polymer electrolyte, solid inorganic electrolyte, molten inorganic electrolyte, etc.

Specifically, the electrolyte may include a non-aqueous organic solvent and a lithium salt.

The aforementioned non-aqueous organic solvent may be used without any special limitations as long as it can serve as a medium for the movement of ions involved in the electrochemical reactions of the battery.

Specifically, the non-aqueous organic solvent may be ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (where R is a C2 to C20 linear, branched, or cyclic hydrocarbon group that may include double bonds, aromatic rings, or ether bonds); amides such as dimethylformamide; dioxolanes such as 1,3-dioxolane; and sulfolane, among others.

Among the above examples, carbonate-based solvents may be preferably used as the non-aqueous organic solvent.

In particular, considering the charge-discharge performance of the battery and compatibility with the cathode material, a mixture of cyclic carbonates with high ionic conductivity and high dielectric constant (for example, ethylene carbonate, propylene carbonate) and low-viscosity linear carbonates (for example, ethyl methyl carbonate, dimethyl carbonate, diethyl carbonate) may be preferably used as the non-aqueous organic solvent. In this case, mixing the cyclic carbonate and the linear carbonate in a volume ratio of 1:1 to 1:9 may be advantageous for exhibiting the aforementioned performance.

Additionally, as the non-aqueous organic solvent, a mixture of ethylene carbonate (EC) and ethyl methyl carbonate (EMC) in a volume ratio of 1:2 to 1:10; or a mixture of ethylene carbonate (EC), ethyl methyl carbonate (EMC), and dimethyl carbonate (DMC) in a volume ratio of 1-3 : 1-9 : 1 may be preferably used.

The lithium salt included in the above electrolyte dissolves in the non-aqueous organic solvent, acts as a source of lithium ions in the battery, enables the basic operation of the lithium secondary battery, and promotes the movement of lithium ions between the cathode and anode.

Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, Lil, and LiB(C₂O₄)₂. Preferably, the lithium salt may be LiPF₆, LiFSI, LiTFSI, and mixtures thereof.

The lithium salt may be included in the electrolyte at a concentration of 0.1 M to 2.0 M. The lithium salt included in this concentration range can provide excellent electrolyte performance by imparting appropriate conductivity and viscosity to the electrolyte.

Optionally, additives aimed at improving battery life characteristics, suppressing battery capacity reduction, and enhancing battery discharge capacity may be included in the electrolyte.

For example, the additives may be haloalkylene carbonate compounds such as difluoro ethylene carbonate, pyridine, triethyl phosphite, triethanolamine, cyclic ethers, ethylene diamine, n-glyme, hexamethylphosphoramide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. The additive may be included at 0.1 wt% to 5 wt% based on the total weight of the electrolyte.

### [ADVANTAGEOUS EFFECTS]

According to the present invention, a method for manufacturing an electrode-integrated separator membrane is provided, which has excellent interlayer bonding durability while minimizing defects caused by the occurrence of pinholes and the like.

### [DETAILED DESCRIPTION OF THE EMBODIMENTS]

Hereinafter, the operation and effects of the invention will be explained in more detail through specific embodiments of the invention. However, these are presented as examples to aid in understanding the invention. It is not intended that the scope of the invention be limited in any way through the following embodiments, and it will be apparent to those skilled in the art that various changes and modifications may be made within the scope and spirit of the invention.

### Example 1

Electrode material composition was prepared consisting of 95.6 wt% active material composed of 90 wt% graphite active material (mixed at a 3:7 ratio of artificial graphite to natural graphite) and 10 wt% SiO; 1 wt% acetylene black as conductive agent; 1.1 wt% carboxymethyl cellulose (CMC) and 2.3 wt% styrene-butadiene rubber (SBR) as binders.

The electrode material composition was coated on one side of an 8 µm thick copper current collector using a comma coater. This was dried and rolled at 130 °C to prepare an anode plate with an anode active material layer. The anode active material layer was formed with 24% porosity and 90 µm thickness.

A binder solution was prepared by dissolving 6 wt% of poly(vinylidene fluoride-co-hexafluoropropylene) as a polymeric binder in N-methyl-2-pyrrolidone (NMP) based on the total weight of the solution. Using a comma coater, the binder solution was applied to a thickness of 15 µm on the anode active material layer of the anode plate. This was dried at a temperature of 100 °C to form a binder coating layer with a thickness of 2.4 µm on the anode active material layer.

An inorganic fine particle dispersion with 40% solids content was prepared by mixing AIO(OH) as an inorganic fine particle with N-methyl-2-pyrrolidone (NMP). The particle size (D50) of the inorganic fine particles measured by a particle size analyzer was analyzed to be 300 nm.

A polymer solution was prepared by dissolving 5 wt% of poly(vinylidene fluoride-co-hexafluoropropylene) as a polymer binder in N-methyl-2-pyrrolidone (NMP). Using a homogenizer mixer, a slurry with a solids content of 40 wt% was obtained by uniformly mixing the inorganic fine particle dispersion and the polymer solution. Using a comma coater, the slurry was applied to a thickness of 40 µm on the binder coating layer. This was dried at a temperature of 130°C to form a porous layer with a thickness of 14 µm on the binder coating layer.

The anode plate with the above binder coating layer and porous layer formed was punched to a size of 31 x 43 mm using a die cutting machine to prepare the anode part (electrode-integrated separator).

A mixture consisting of 94 wt% LiNiCoMnO₂ (Ni:Co:Mn=8:1:1) as the cathode active material, 3 wt% conductive carbon black (Super P; IMERYS Graphite & Carbon) as the conductive agent, and 3 wt% polyvinylidene fluoride as the binder was placed in NMP to prepare a uniformly dispersed slurry.

The slurry was coated on one side of an aluminum current collector, dried and rolled to prepare a cathode plate with the cathode active material layer stacked on it. The cathode plate was punched to a size of 30 x 42 mm using a metal mold punching machine to prepare the cathode part.

The cathode active material layer of the cathode part was placed in contact with the porous layer of the anode part to form an electrode facing body, and an electrode assembly was manufactured by pressure lamination at 90°C.

The electrode assembly was housed in a pouch to form a small cell, and an electrolyte was injected into the pouch to manufacture five lithium secondary batteries.

At this time, the electrolyte used was a non-aqueous organic solvent mixed with ethylene carbonate (EC) and ethyl methyl carbonate (EMC) in a volume ratio of 3:7, in which 0.5M LiFSI, 0.7M LiPF₆, and 2 wt% of vinylene carbonate (VC) were dissolved.

### Example 2

Using a comma coater, the binder solution was applied to the anode active material layer of the anode plate with a thickness of 40 µm, except for this, the electrode-integrated separator for a lithium secondary battery and the lithium secondary battery were manufactured in the same manner as in Example 1.

### Example 3

Except for using a binder solution in which 6.6 wt% of the polymer binder poly(vinylidene fluoride-co-hexafluoropropylene) is dissolved in NMP based on the total weight of the solution instead of the above binder solution, an electrode-integrated separator for a lithium secondary battery and a lithium secondary battery were manufactured in the same manner as in Example 1.

### Example 4

Using a comma coater, the binder solution was applied to the anode active material layer of the anode plate with a thickness of 40 µm, except for this, an electrode-integrated separator for a lithium secondary battery and a lithium secondary battery were manufactured in the same manner as in Example 3.

### Example 5

Instead of the aforementioned binder solution, a binder solution was used where 4.0wt% of a polymer binder, poly(vinylidene fluoride-co-hexafluoropropylene), was dissolved in NMP based on the total weight of the solution. Except for this, the electrode-integrated separator for a lithium secondary battery and the lithium secondary battery were manufactured in the same manner as in Example 1.

### Example 6

Using a comma coater, the binder solution was applied to a thickness of 40 µm on the anode active material layer of the anode plate, except for this, the electrode-integrated separator for a lithium secondary battery and the lithium secondary battery were manufactured in the same manner as in Example 5.

### Comparative Example 1

An electrode-integrated separator for a lithium secondary battery and a lithium secondary battery were manufactured in the same manner as in Example 1, except that the binder coating layer was not formed on the aforementioned anode active material layer.

### Comparative Example 2

Instead of the aforementioned binder solution, a binder solution was used in which poly(vinylidene fluoride-co-hexafluoropropylene) was dissolved at 1.0 wt% based on the total weight of the solution in NMP. Except for this, an electrode-integrated separator for a lithium secondary battery and a lithium secondary battery were manufactured in the same manner as in Example 1.

### Comparative Example 3

Instead of the aforementioned binder solution, a binder solution was used in which 3.0 wt% of poly(vinylidene fluoride-co-hexafluoropropylene) was dissolved in NMP based on the total weight of the solution, and then an electrode-integrated separator for a lithium secondary battery and a lithium secondary battery were manufactured in the same manner as in Example 1.

### Reference Example 1

Except for using a binder solution in which 12 wt% of poly(vinylidene fluoride-co-hexafluoropropylene) was dissolved in NMP as a polymer binder based on the total weight of the solution instead of the above binder solution, an electrode-integrated separator for a lithium secondary battery and a lithium secondary battery were manufactured in the same manner as in Example 1.

### Reference Example 2

Using a comma coater, the binder solution was applied to the anode active material layer of the anode plate at a thickness of 70 µm, except for this, the electrode-integrated separator for lithium secondary batteries and the lithium secondary battery were manufactured in the same manner as in Example 1.

### Reference Example 3

Instead of the aforementioned binder solution, a binder solution was used in which 8 wt% of poly(vinylidene fluoride-co-hexafluoropropylene) was dissolved in NMP based on the total weight of the solution. Except for this, the electrode-integrated separator for a lithium secondary battery and the lithium secondary battery were manufactured in the same manner as in Example 1.

### Experimental Example 1

The viscosity of the binder solution applied in the above example and comparative example was measured under conditions of 25 °C and 1.0 shear rate using the Discovery HR-2 rheometer from TA Instruments.

### Experimental Example 2

In the step of forming the binder coating layer and the porous layer according to the above examples and comparative examples, the appearance of the binder coating layer and the porous layer was visually observed to check for the presence or absence of bubbles (O, X).

### Experiment Example 3

For the electrode-integrated separators manufactured in the above examples and comparative examples (five samples each), a 180-degree peel strength test was conducted using the TA-XT2 plus equipment from Stable Micro Systems, following the ASTM D3330 (2018) test method.

The samples (electrode-integrated separators) were fixed vertically to the ground, and tape (3M Scotch Tape, 18 mm in width) was attached in a U-shape on the porous layer. One end of the tape was hooked onto the grip of the device and pulled in the vertical direction to the ground (measurement speed of 300 mm/min, measurement distance of 5 cm), measuring the force exerted on the grip during the 180-degree peel-off. This test was performed on five samples each, and the average value of the 180-degree peel-off force was calculated.

### Experimental Example 4

The impedance and resistance (ohm) were measured by applying an alternating current at a frequency of 0.5/s to 200000/s to the binder coating layer and the porous layer according to the above examples and comparative examples.

**[Table 1]**

| | Viscosity (cP) of binder solution | Bubble occurrence | Peel strength (gf/18mm) | Electrical resistance (ohm) |
|---|---|---|---|---|
| Example 1 | 6215 | X | 258.1 | 0.72 |
| Example 2 | 6215 | X | 253.8 | 0.75 |
| Example 3 | 9132 | X | 272.4 | 0.74 |
| Example 4 | 9132 | X | 276.3 | 0.76 |
| Example 5 | 1382 | X | 235.2 | 0.70 |
| Example 6 | 1382 | X | 238.7 | 0.69 |
| Comparative Example 1 | - | O | 190.9 | 0.67 |
| Comparative Example 2 | 24 | O | 191.4 | 0.68 |
| Comparative Example 3 | 552 | O | 212.3 | 0.67 |
| Reference Example 1 | 58693 | X | 315.7 | 0.93 |
| Reference Example 2 | 6215 | X | 366.7 | 1.17 |
| Reference Example 3 | 18687 | X | 285.1 | 0.85 |

Referring to the results of the above experimental examples, in the manufacturing method according to the above embodiments, no bubbles were generated during the formation of the binder coating layer and the porous layer, and good coating properties were exhibited. Furthermore, the electrode-integrated separator manufactured by the method according to the above embodiments exhibited high peel strength without an increase in electrical resistance due to the binder coating layer and the porous layer.

In the manufacturing method according to the comparative examples, a large amount of bubbles were generated during the formation of the binder coating layer and the porous layer, showing inferior coating properties. Moreover, the electrode-integrated separator manufactured by the method according to the comparative examples had a problem of low peel strength.

In the manufacturing method according to the reference examples, no bubbles were generated during the formation of the binder coating layer and the porous layer, and high peel strength was exhibited, but there was a problem of significantly increased electrical resistance.

Although the present invention has been described with reference to limited embodiments, it is not limited thereto, and various modifications and alterations may be made by those skilled in the art within the scope of the inventive concept of the present invention and equivalents defined by the claims below.

## Claims

1. A method for manufacturing an electrode-integrated separator for a lithium secondary battery, comprising:
a step of forming a binder coating layer by applying a binder solution containing a first polymer binder on an electrode substrate; and
a step of forming a porous layer by applying a slurry containing a second polymer binder and inorganic fine particles on the binder coating layer;
wherein the binder solution has a viscosity of 1000 cP to 9500 cP at 25 °C.

2. The method for manufacturing an electrode-integrated separator for a lithium secondary battery according to claim 1,
wherein the binder solution has a viscosity in range of 5500 cP to 9500 cP at 25 °C.

3. The method for manufacturing an electrode-integrated separator for a lithium secondary battery according to claim 1,
wherein the first and second polymer binders are each independently at least one compound selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, polyvinyl acetate, polyimide, polyetherimide, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene-butadiene rubber, and fluoro rubber.

4. The method for manufacturing an electrode-integrated separator for a lithium secondary battery according to claim 1,
wherein the binder solution contains the first polymer binder in a range of 3.5 wt% to 7.0 wt% of based on the total weight of the solution.

5. The method for manufacturing an electrode-integrated separator for a lithium secondary battery according to claim 1,
wherein the binder solution is applied on the electrode substrate to a thickness of 10 µm to 50 µm.

6. The method for manufacturing an electrode-integrated separator for a lithium secondary battery according to claim 1,
wherein the inorganic fine particles is at least one selected from the group consisting of SrTiO₃, SnO₂, CeO₂, MgO, NiO, CaO, ZnO, ZrO₂, Y₂O₃, Al₂O₃, boehmite (AIO(OH)), Al(OH)₃, TiO₂, SiC, BaTiO₃, Pb(Zr,Ti)Os, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

7. The method for manufacturing an electrode-integrated separator for a lithium secondary battery according to claim 1,
wherein the inorganic fine particles have a particle size in a range of 0.001 µm to 10 µm.

8. The method for manufacturing an electrode-integrated separator for a lithium secondary battery according to claim 1,
wherein the binder solution and the slurry each independently include at least one solvent selected from the group consisting of acetone, methyl isobutyl ketone, propylene glycol monomethyl ether acetate, N-methyl-2-pyrrolidone, methyl acetate, ethyl acetate, γ-butyrolactone, and ε-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, dimethylformamide, 1,3-dioxolane, and sulfolane.

9. The method for manufacturing an electrode-integrated separator for a lithium secondary battery according to claim 1,
wherein the slurry has a solid content in a range of 30 wt% to 80 wt%.

10. The method for manufacturing an electrode-integrated separator for a lithium secondary battery according to claim 1,
wherein the electrode substrate includes an electrode active material layer laminated on an electrode current collector layer.
